# EUROPÄISCHE PATENTSCHRIFT

(11) **EP 0 710 580 B1**
(45) Veröffentlichungstag und Bekanntmachung des Hinweises auf die Patenterteilung: **17.06.1998**
(21) Anmeldenummer: 95114437.7
(22) Anmeldetag: 14.09.1995
(51) Int. Cl.: B60K 23/02, F16D 48/02

(54) **Notkuppelungseinrichtung**
Emergency clutch arrangement
Dispositif d'embrayage d'urgence

(30) Priorität: 04.11.1994 DE 4439447
(43) Veröffentlichungstag der Anmeldung: 08.05.1996
(73) Patentinhaber: DAIMLER-BENZ AKTIENGESELLSCHAFT, 70567 Stuttgart (DE)
(72) Erfinder: Paulsen, Lutz, Dr.-Ing., D-73733 Esslingen (DE); Müller, Alfons, Dipl.-Ing., D-70378 Stuttgart (DE)

(56) Entgegenhaltungen:
- EP-A- 0 516 309
- DE-A- 2 856 150
- FR-A- 2 611 837
- GB-A- 2 258 283
- VDI Z, Bd. 134, Nr. SPECIAL, 1.März 1992 DÜSSELDORF, DE, Seiten 52-68, XP 000297808 BADER C 'ELEKTRONISCHE ANTRIEBSSTEUERUNG FÜR NUTZFAHRZEUGE'

## Beschreibung

Die Erfindung betrifft eine Notkuppeleinrichtung für Nutzfahrzeuge, bei denen zum Wechsel von Schaltstufen eines mehrstufigen Wechselgetriebes erforderliche Aus- und Einkuppelvorgänge, die durch eine Kupplungssteuereinheit elektronisch steuerbar sind, mittels einer hydropneumatischen Kupplungs-Betätigungseinrichtung selbsttätig durchführbar sind, und im Falle einer Fehlfunktion der automatischen Schaltbetriebssteuerung zunächst eine Schutzventilanordnung wirksam wird, durch die bei einer Fehlfunktion der Steuerung die Kupplung vermittels der Kupplungs-Betätigungseinrichtung bei langsamer Fahrt (ν<νₛ) ausgerückt und bei schneller Fahrt (ν>νₛ) eingerückt oder eingerückt gehalten wird, wonach der Fahrer die in einem Notfahrbetrieb für einen Wechsel der Schaltstufen erforderlichen Aus- und Einrückbetätigungen der Kupplung mittels der Notkuppeleinrichtung steuern kann, und mit den weiteren, im Oberbegriff des Patentanspruchs 1 genannten, gattungsbestimmenden Merkmalen.

Eine derartige Notkuppeleinrichtung ist durch die Fachzeitschrift "Antriebstechnik", März 1992, S. 52 ff.bekannt und in Verbindung mit einer Kupplungseinrichtung für Nutzfahrzeuge mit elektronischer Antriebssteuerung im Detail erläutert.

Im normalen, d.h. automatisch gesteuerten Schaltbetrieb wird bei der bekannten Kupplungseinrichtung das Einund Ausrücken der Kupplung mittels eines elektromotorisch angetriebenen hydraulischen Geberzylinders gesteuert, der über ein zur Umschaltung von Normal- auf Notbetrieb vorgesehenes Umschaltventil einen hydraulischen Nehmerzylinder eines hydropneumatischen Kraftverstärkers ansteuert, der die Kupplung betätigt und einen pneumatischen Verstärkerzylinder hat, dessen Druckbeaufschlagung mittels eines Proportionalventils gesteuert wird, das hydraulisch angesteuert ist. Für den Notfahrbetrieb ist ein zweiter, über das Notbetrieb-Umschaltventil mit dem Nehmerzylinder des Kraftverstärkers koppelbarer Geberzylinder vorgesehen, der mittels eines pneumatischen Antriebszylinders antreibbar ist, der seinerseits über eine Schutzventilanordnung ansteuerbar ist und im Falle einer Fehlfunktion der Schalteinrichtung, je nach Funktionsstellung eines bistabilen Schutzart-Vorwahlventils, entweder im Sinne einer Ausrückbetätigung der Kupplung angesteuert wird, was für den Fall vorgesehen ist, daß die Fahrzeuggeschwindigkeit niedriger ist als ein Schwellenwert v_{S}, oder nicht angesteuert bleibt, mit der Folge, daß die Kupplung eingerückt bleibt, was für die höheren Fahrzeuggeschwindigkeiten als Sicherheitsfunktion vorgesehen ist.

Der pneumatische Antriebszylinder des Notgeberzylinders ist im Notbetrieb über ein pneumatisches Notfahrventil ansteuerbar, das der Fahrer von Hand betätigt.

Mit der Betätigung des Notfahrventils wird auch ein als Positionssensor wirkender elektrischer Schalter aus seiner Grundstellung in seine Schaltstellung umgeschaltet und dadurch mittelbar die dem Notfahrbetrieb zugeordnete Funktionsstellung eines bistabilen Schutzart-Vorwahlventils der Schutzventilanordnung hergestellt.

Nachteilig hierbei ist die relativ schlechte Dosierbarkeit des Steuerdruckes und damit der Kupplungsstellung mittels des Notfahrventils. Zum einen sollte der Druck extrem feinfühlig geregelt werden können, da geringe Änderungen die Kupplungsstellung wegen der nicht linearen Kennlinie der Kupplungsausrückfedern stark beeinflussen; infolgedessen muß ein aufwendig konstruiertes und entsprechend teures Notfahrventil eingesetzt werden. Zum anderen kann bei einer schnellen Betätigung des Ventils die komprimierte Luft nicht rasch genug in den pneumatischen Antriebszylinder ein- bzw. aus diesem abströmen. Die Folge hiervon ist, daß die Stellung der Kupplung gegenüber derjenigen des Notfahrventils mit einem mehr oder weniger erheblichen Nachlauffehler behaftet ist, der insbesondere im Rangierbetrieb den Notbetrieb sehr erschwert und diesen für den Fahrer anstrengend werden läßt.

Aufgabe der Erfindung ist es daher, eine Notkuppeleinrichtung der eingangs genannten Art dahingehend zu verbessern, daß die auf die Kupplung wirkenden Betätigungskräfte gut dosierbar sind, so daß die Kupplung im wesentlichen zeitgleich mit Notbetätigungsbewegungen des Fahrers ihre Aus- und Einrückbewegungen ausführt und, falls erforderlich, auch in einem definierten Schlupfbereich gehalten werden kann.

Diese Aufgabe wird erfindungsgemäß durch die kennzeichnenden Merkmale des Patentanspruchs 1 gelöst.

Hierdurch erzielbare, günstige Betriebseigenschaften der erfindungsgemäßen Notkuppeleinrichtung sind zumindest die folgenden:

Durch die unmittelbar am Kolben des Geberzylinders der Notkuppeleinrichtung abgestützte Anordnung des Pedals ist im Notbetrieb eine volumetrisch geführte, weggesteuerte Betätigung der Kupplung möglich, die kaum gewöhnungsbedürftig ist, da der Notbetrieb lediglich einem - schon als gewohnt voraussetzbaren - Normalbetrieb eines weniger komfortabel ausgestatteten Nutzfahrzeuges entspricht, auch wenn die vom Fahrer aufzubringenden Betätigungskräfte geringfügig größer sein mögen. Durch die in Relation zur Position des Geberzylinderkolbens erfolgende Ansteuerung des Schutzart-Vorwahlventils der beim Auftreten eines Fehlers die Schutzfunktionen - selbsttätiges Einrücken oder Ausrücken der Kupplung je nach Fahrzeuggeschwindigkeit - vermittelnden Schutzventilanordnung wird eine bedarfsgerechte Aktivierung des pneumatischen Hilfskreises der Kupplungseinrichtung zum Betätigen der Kupplung erzielt und auch insoweit deren situationsgerechte Betätigung erleichtert.

Durch die gemäß Anspruch 2 vorgesehene Anordnung des Notpedals ist die Schalteinrichtung des Wechselgetriebes auf einfache Weise wirksam gegen eine Fehlbetätigung geschützt.

Durch die Merkmale der Ansprüche 3 und 4 sind schaltungstechnische Realisierungen der Schutzfunktion sowie der Notbetrieb-Steuerungsfunktion einer Ausführungsform der Notkuppeleinrichtung angegeben, die sich durch einen besonders einfachen Gesamtaufbau auszeichnet.

In Kombination hiermit sind durch die Merkmale der Ansprüche 5 und 6 der Funktionszuverlässigkeit der Notkuppeleinrichtung dienende Maßnahmen angegeben.

Durch die Merkmale des Anspruchs 7 ist, ihrem prinzipiellen Aufbau nach, eine weitere Ausführungsform der Notkuppeleinrichtung angegeben, bei der ein weiterer, zur Erzielung der Schutzfunktion genutzter Geberzylinder vorgesehen ist, der in bevorzugter Gestaltung gemäß den Merkmalen des Anspruchs 8 ausgebildet ist.

Bei dieser Ausführungsform kann ein der serienmäßigen Gestaltung entsprechender Kraftverstärker mit Proportionalventil verwendet werden, was aus Kostengründen vorteilhaft ist.

In Kombination hiermit sind durch die Merkmale der Ansprüche 9 bis 11 mit einfachen schaltungstechnischen Maßnahmen und einfach gestalteten Ventilelementen realisierbare Steuerungseinrichtungen für den Schutz- und den Notbetrieb der Notkuppeleinrichtung angegeben, die in bevorzugter Gestaltung derselben durch die Sicherheitsmaßnahmen gemäß den Merkmalen der Ansprüche 12 und 13 ergänzt sind.

Unter Gesichtspunkten der Einfachheit des Gesamtaufbaus und der Funktionssicherheit ist die dem Anspruch 14 entsprechende Nutzung eines für sämtliche Geberzylinder gemeinsam vorgesehenen Ausgleichsbehälters, aus dem auch in den Nehmerzylinder Hydrauliköl nachströmen kann, für sämtliche Ausführungsformen der Notkuppeleinrichtung gleichermaßen günstig.

Weitere Einzelheiten der erfindungsgemäßen Notkuppeleinrichtung ergeben sich aus der nachfolgenden Beschreibung zweier Ausführungsbeispiele anhand der Zeichnung.
Es zeigen
- Fig. 1: eine schematisch vereinfachte Blockschaltbilddarstellung eines ersten Ausführungsbeispiels der erfindungsgemäßen Notkuppeleinrichtung und
- Fig. 2: ein weiteres Ausführungsbeispiel in einer der Fig. 1 entsprechenden Darstellung.

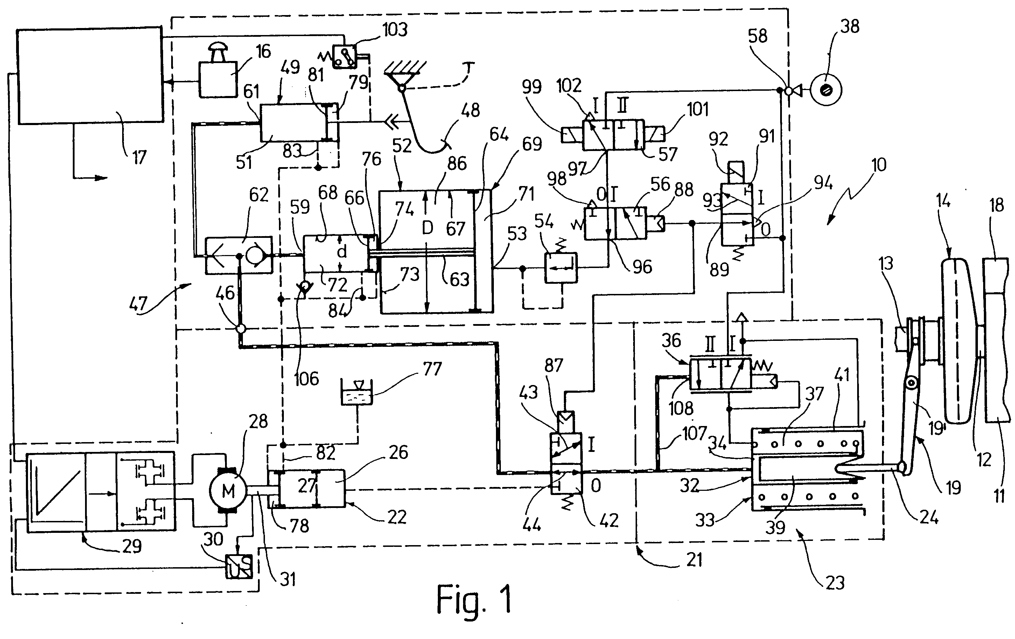

Die in der Fig. 1, auf deren Einzelheiten zunächst verwiesen sei, insgesamt mit 10 bezeichnete Kupplungseinrichtung ist für ein schweres Nutzfahrzeug konzipiert, das ein mehrstufiges, z.B. 16-stufiges, lediglich schematisch angedeutetes Wechselgetriebe 11 hat, dessen Antriebswelle 12 mit der Abtriebswelle 13 des im übrigen nicht dargestellten Fahrzeugmotors über eine zum Zweck der Erläuterung als Membranfederkupplung mit gezogener Ausrückung vorausgesetzte Kupplung 14 kuppelbar und zur Durchführung von Schaltvorgängen von dieser entkuppelbar ist. Für das Fahrzeug ist weiter vorausgesetzt, daß es eine elektropneumatische Schaltung hat, bei der der Fahrer die Wahl ihm als günstig erscheinender Schaltstufen des Wechselgetriebes 11 durch Betätigung eines Gebergeräts 16 trifft, mittels dessen Befehlssignale zum Hochschalten, zum Zurückschalten sowie für Rückwärtsfahrt in eine elektronische Steuereinheit 17 eingebbar sind, die hierauf das selbsttätige Ausrücken der Kupplung 14 und Ändern der Schaltstufen in dem vom Fahrer angegebenen Sinne sowie das Wiedereinrücken der Kupplung selbsttätig steuert, damit der Fahrer ohne nennenswerte körperliche Anstrengung die Vielzahl von Schaltvorgängen bewältigen kann, die einen wirtschaftlich optimalen Betrieb des Fahrzeuges ermöglichen.

Eine zum Wechseln der Schaltstufen im Wechselgetriebe 11 erforderliche, für sich bekannte elektrisch ansteuerbare Schalteinrichtung 18 ist lediglich schematisch angedeutet.

Zur Steuerung der das Ausrücken und das Einrücken der Kupplung 14 vermittelnden Stellbewegungen des als zweiarmiger Hebel ausgebildeten Kupplungs-Betätigungsgliedes 19 ist eine insgesamt mit 21 bezeichnete, in der Fig. 1 gestrichelt umrandete Kupplungs-Betätigungseinrichtung vorgesehen, die als Steuerelement einen hydraulischen Geberzylinder 22 und als Stellantrieb einen auf das Kupplungs-Betätigungsglied 19 wirkenden hydropneumatischen Kraftverstärker 23 umfaßt, dessen Stellkraft über einen Betätigungsstößel 24 auf den Kraftarm 19' des Kupplungs-Betätigungsgliedes 19 übertragen wird.

Der den Ausgangsdruckraum 26 des Geberzylinders 22 druckdicht beweglich begrenzende Kolben 27 ist mittels eines Elektromotors 28 mit umkehrbarer Drehrichtung über einen - nicht dargestellten - Spindeltrieb im Sinne von Druckaufbau- und Druckabbaubewegungen antreibbar, zu deren Steuerung ein lediglich schematisch dargestellter, für sich bekannter Lageregler 29 vorgesehen ist, der aus einem Vergleich von Positions-SollwertAusgangssignalen der elektronischen Steuereinheit 17 mit für die Position des Kolbens 27 bzw. seiner Kolbenstange 31 charakteristischen Ausgangssignalen eines Wegsensors 30, die für die bedarfsgerechte Ansteuerung des Elektromotors 28 erforderlichen Ansteuersignale erzeugt.

Der hydropneumatische Kraftverstärker 23 umfaßt einen mit dem Geberzylinder 22 koppelbaren hydraulischen Nehmerzylinder 32 und einen mit dem Nehmerzylinder 32 zu einer Baueinheit zusammengefaßten pneumatischen Antriebszylinder 33 als Verstärkerelement sowie ein mit dem im Antriebsdruckraum 34 des Nehmerzylinders 32 herrschenden Druck angesteuertes Proportionalventil 36 als Steuerelement, mittels dessen in den den Nehmerzylinder 32 koaxial umgebenden ringzylindrischen Antriebsdruckraum 37 des pneumatischen Antriebszylinders ein, mittels des Proportionalventils 36 von dem hohen Ausgangsdruck einer pneumatischen Hilfsdruckquelle 38 abgeleiteter, zu dem im Antriebsdruckraum 34 des Nehmerzylinders 32 herrschenden Druck proportionaler Druck einkoppelbar ist.

Der den Antriebsdruckraum 34 axial beweglich begrenzende - zylindrische - Kolben 39 des Nehmerzylinders 32 und der ringzylindrisch-topfförmig ausgebildete Kolben 41 des pneumatischen Antriebszylinders 33 sind fest miteinander verbunden und greifen daher gemeinsam an dem mit ihrer zentralen Längsachse etwa koaxial verlaufenden Betätigungsstößel 24 der Kupplungs-Betätigungseinrichtung 21 an.

Desweiteren umfaßt die Kupplungs-Betätigungseinrichtung 21 ein Notbetrieb-Umschaltventil 42, das beim dargestellten Ausführungsbeispiel als 3/2-Wegeventil ausgebildet ist, das aus einer dem normalen Fahrbetrieb, in dem die Betätigung der Kupplung 14 und der Wechsel der Schaltstufen des Getriebes 11 automatisch gesteuert sind, zugeordneten erregten Stellung I, in welcher der Ausgangsdruckraum 26 des motorgesteuerten Geberzylinders 22 mit dem Antriebsdruckraum 34 des Nehmerzylinders 32 des Kraftverstärkers 23 über einen ersten Durchflußpfad 43 dieses Umschaltventils 42 kommunizierend miteinander verbunden sind, selbsttätig in seine federzentrierte Grundstellung 0 zurückschaltbar ist, in der über einen zu dem erstgenannten alternativen Durchflußpfad 44 dieses Notbetrieb-Umschaltventils 42, der Antriebsdruckraum 34 des Nehmerzylinders 33 des Kraftverstärkers 23 mit dem Druckausgang 46 einer insgesamt mit 47 bezeichneten Notbetrieb-Steuereinrichtung verbunden ist, die ein vom Fahrer zu steuerndes Ein- und Ausrücken der Kupplung 14 auch dann noch ermöglicht, wenn z.B. durch einen Ausfall der elektronischen Steuereinheit 17 oder einen Defekt des Antriebsmotors 28 des Geberzylinders 22 der automatische Schaltbetrieb nicht mehr möglich ist, sowie die zusätzliche Funktion vermittelt, daß mit einem derartigen Ausfall der automatischen Schaltung die Kupplung 14, auch wenn sie beim Auftreten des Fehlers im Sinne eines Ausrückens oder Einrückens betätigt ist, in einen sicheren Zustand übergeht, wobei als "sicher" anzusehen ist, wenn die Kupplung, sofern sich das Fahrzeug mit einer Geschwindigkeit v_{F} bewegt, die größer als ein Schwellenwert v_{S} von z.B. 10 km/h ist, eingerückt wird, und, falls die Fahrzeuggeschwindigkeit niedriger ist als dieser Wert v_{S} in den ausgerückten Zustand übergeht.

Die Notbetrieb-Steuereinrichtung 47 umfaßt einen mittels eines Pedals 48 betätigbaren hydraulischen Geberzylinder 49, dessen Auslegung hinsichtlich des aus seinem Ausgangsdruckraum 51 verdrängbaren Hydrauliköl-Volumens demjenigen des motorgesteurten Geberzylinders 26 der Kupplungs-Betätigungseinrichtung 21 entspricht.

Als weitere hydraulische Hilfsdruckquelle der Notbetrieb-Steuerungseinrichtung 47 ist ein insgesamt mit 52 bezeichneter Druckumsetzer vorgesehen, der einen pneumatischen Eingang 53 hat, an den über ein Druckbegrenzungsventil 54, ein mit diesem hydraulisch in Reihe geschaltetes Schutzventil 56 und ein mit diesem in Reihe geschaltetes Schutzart-Vorwahlventil 57 mit dem Druckausgang 58 der pneumatischen Hilfsdruckquelle 38 verbindbar ist sowie einen hydraulischen Ausgang 59, der alternativ zu dem Druckausgang 61 des mittels des Pedals 48 betätigbaren Geberzylinders 49 an den Druckausgang 46 der Notbetrieb-Steuerungseinrichtung 47 anschließbar ist. Den diesbezüglichen - alternativen - Anschluß der Druckausgänge 59 und 61 des Druckumsetzers 52 bzw. des pedalbetätigten Geberzylinders 49 vermittelt ein als druckgesteuertes 3/2-Wegeventil wirkendes Wechsel-Rückschlagventil 62, das den Druckausgang 46 der Notbetrieb-Steuerungseinrichtung 46 jeweils mit demjenigen Druckausgang 59 oder 61 des Druckumsetzers 52 bzw. des Geberzylinders 49 verbindet, an dem der höhere Ausgangsdruck herrscht.

Der Druckumsetzer 52 hat - in üblicher Gestaltung - zwei durch eine Kolbenstange 63 starr miteinander verbundene Kolbenflansche 64,66 unterschiedlichen Durchmessers D und d, die in aneinander anschließenden Bohrungsstufen 67,68 entsprechend verschiedenen Durchmessers des Umsetzer-Gehäuses 69 druckdicht verschiebbar geführt sind, wobei der dem Durchmesser nach größere Kolbenflansch 64 die axial bewegliche Begrenzung der Eingangskammer 71 bildet und der dem Durchmesser nach kleinere Kolbenflansch 66 die - hydraulische - Ausgangskammer 72 des Druckumsetzers beweglich begrenzt, die über das Wechsel-Rückschlagventil 62 an den Druckausgang 46 der Notbetrieb-Steuerungseinrichtung 47 anschließbar ist. Die beiden Bohrungsstufen 67,68, die über eine radiale Gehäusestufe 73 aneinander anschließen sind durch ein in das Gehäuse 69 flüssigkeitdsdicht eingesetztes ringscheibenförmiges Zwischenwandstück 74, das eine zentrale Bohrung hat, durch die die Kolbenstange 63 des Umsetzerkolbens 63,64,66 flüssigkeitsdicht verschiebbar hindurchtritt. Dieses Zwischenwandstück 74 bildet die axial gehäusefeste Begrenzung eines axial beweglich durch den kleineren Kolbenflansch 66 begrenzten Nachlaufraumes 76, der mit einem Ausgleichsbehälter 77 in permanent-kommunizierender Verbindung steht, an den auch funktionell entsprechende Ausgleichsräume 78,79 des motorgesteuerten Geberzylinders 22 bzw. des mittels des Notpedals 48 betätigbaren Geberzylinders 49 permanent angeschlossen sind.

In den jeweils dem größten Betrag des Volumens der Ausgangsdruckkammern 26 und 51 sowie der Ausgangsdruckkammer 72 des motorgesteuerten Geberzylinders 22 und des mittels des Notpedals 48 betätigbaren Geberzylinders 49 sowie des Druckumsetzers 52 entsprechenden Positionen des Kolbens 27 des motorgesteuerten Geberzylinders 22 und des Kolbens 81 des mittels des Notpedals betätigbaren Geberzylinders 49 sowie der Kolbenanordnung 64,66 des Druckumsetzers 52 sind deren Ausgangsdruckräume 26,51 und 72 über Ausgleichs-Strömungspfade 82 und/oder 83 und/oder 84 die in unmittelbarer Nähe der jeweiligen Kolben - in deren Grundstellung- in die Ausgangsdruckkammern 26,51,72 münden, ebenfalls kommunizierend mit dem Ausgleichsbehälter 77 verbunden. Diese Ausgleichsströmungspfade 82,83,84 werden gegen die jeweilige Ausgangsdruckkammer 26,51,52 abgesperrt, sobald der diese jeweils beweglich begrenzende Kolben 27 oder 81 bzw. 66,63,64 einen kleinen Anfangsabschnitt seines Druckaufbauhubes ausgeführt hat, und gelangen bei weiterer Kolbenverschiebung im Sinne eines Druckaufbaus in kommunizierende Verbindung mit dem jeweiligen Ausgleichsraum 78 und/oder 79 bzw. 76.

Die Gehäusestufe 73 und das ringscheibenförmige Zwischenwandstück 74 des Umsetzergehäuses 69 bilden die gehäusefeste axiale Begrenzung eines innerhalb der Bohrungstufe 67 axial beweglich durch den größeren Kolbenflansch 64 begrenzten Medientrennraumes 86, der permanent druckentlastet, d.h. zur Umgebungsatmosphäre hin entlüftet ist und über eine nicht dargestellte Leckölleitung ebenfalls mit dem Ausgleichsbehälter 77 verbunden ist.

Das im Falle eines Notbetriebes die hydraulische Kopplung des Kraftverstärkers 23 der Kupplungsbetätigungseinrichtung mit dem Druckausgang 46 der Notbetrieb-Steuerungseinrichtung 47 vermittelnde Notbetrieb-Umschaltventil 42 und das hierbei im Bedarfsfalle die pneumatische Ansteuerung des Druckumsetzers 52 vermittelnde Schutzventil 56 sind als druckgesteurte, pneumatisch betätigbare Ventile ausgebildet, deren Steuerkammern 87 bzw. 88 gemeinsam an einen Steuerausgang 89 eines zu ihrer elektrischen Vorsteuerung vorgesehenen Notbetrieb-Steuerventils 91 angeschlossen, dessen Grundstellung 0 dem Notbetrieb zugeordnet ist und dessen bei Erregung seines Steuermagneten 92 mit einem Ausgangssignal der elektronischen Steuereinheit 17 eingenommene Funktionsstellung I dem automatisch ablaufenden "normalen" Schaltbetrieb zugeordnet ist.

Das Notbetrieb-Steuerventil 91 ist als 3/2-Wegemagnetventil, das in seiner - federzentrierten - Grundstellung 0 die Entlüftung der Steuerkammern 87,88 des Notbetrieb-Umschaltventils 42 und des Schutzventils 46 vermittelt und diese gegen den Druckausgang 48 der Hilfsdruckquelle 38 absperrt und in seiner erregten Stellung I über einen in dieser freigegebenen Durchflußpfad 93 den Druckausgang 58 des pneumatischen Hilfsdruckquelle 38 mit den Steuerkammern 87,88 des Notbetrieb-Umschaltventils 42 sowie des Schutzventils 46 verbindet und gegen den Entlüftungsausgang 94 des Notbetrieb-Steuerventils 91 absperrt.

Das Schutzventil 56 ist als 3/2-Wegeventil ausgebildet, das in seiner - federzentrierten - Grundstellung 0 seinen mit dem Druckbegrenzungsventil 54 verbundenen Steueranschluß 96 mit dem Steueranschluß 97 des Schutzart-Vorwahlventils 57 verbindet und gegen einen Entlüftungs-Ausgang 98 des Schutzventils 56 absperrt und in der bei Druckbeaufschlagung seiner Steuerkammer 88 eingenommenen Schaltstellung I seinen Steueranschluß 96 mit dem Entlüftungsausgang 98 verbindet und gegen das Schutzart-Vorwahlventil 57 absperrt.

Das beim dargestellten Ausführungsbeispiel zwischen das Schutzventil 56 und den Druckausgang 58 der pneumatischen Hilfsdruckquelle 38 geschaltete Schutz-Vorwahlventil 57 ist als bistabiles, durch kurzdauernde elektrische Schaltimpulse der elektronischen Steuereinheit 17 ansteuerbares 3/2-Wege-Magnetventil mit zwei Steuerwicklungen 99 und 101 ausgebildet, das bei alleiniger Erregung der einen Steuerwicklung 99 in seine Funktionsstellung I gelangt, in der sein Steuerausgang 97 mit einem Entlüftungsausgang 102 des Schutzart-Vorwahlventils 57 verbunden und gegen den Druckausgang 58 der Hilfsdruckquelle 38 abgesperrt ist und bei alleiniger Erregung seiner anderen Steuerwicklung 101 in seine Funktionsstellung II gelangt, in welcher der Steuerausgang 97 des Schutzart-Vorwahlventils 57 mit dem Druckausgang 58 der pneumatischen Hilfsdruckquelle 38 verbunden und gegen den Entlüftungsanschluß 102 des Schutzart-Vorwahlventils abgesperrt ist.

Das Schutzart-Vorwahlventil hat die Eigenschaft, daß es nach einer zeitweisen, jeweils nur kurzzeitigen Erregung einer seiner beiden Steuerwicklungen 99 oder 101 die hiermit verknüpfte Funktionsstellung I bzw. II jeweils so lange beigehält, bis eine Erregung der anderen Steuerwicklung 101 bzw. 99 erfolgt.

Die Ansteuerung des Schutzart-Vorwahlventils 57 durch Ausgangssignale der elektronischen Steuereinheit 17 erfolgt derart, daß das Schutzart-Vorwahlventil 57 seine Funktionsstellung I einnimmt, wenn und solange das Fahrzeug sich mit einer Geschwindigkeit v_{F} bewegt, die größer als ein Schwellenwert v_{S} ist und seine Funktionsstellung II einnimmt, wenn die Fahrzeuggeschwindigkeit kleiner ist als der genannte Schwellenwert v_{S}.

Als weiteres Steuerelement der Notbetrieb-Steuerungseinrichtung 47 ist ein lediglich schematisch angedeuteter, auf eine Positionsänderung des Kolbens 81 des mittels des Notpedals 48 betätigbaren Geberzylinders 49 ansprechender Positions- oder Weg-Sensor 103 vorgesehen, der ein die Abschaltung des automatischen Schaltbetriebes vermittelndes, der elektronischen Steuereinheit 17 zugeleitetes Ausgangssignal erzeugt, wenn und solange der Kolben 81 des mittels des Notpedals 48 betätigbaren Geberzylinders 49 aus seiner größtem Volumen seiner Ausgangssdruckkammer 51 entsprechenden Grundstellung ausgerückt ist.

Das Notpedal 48 der Notbetrieb-Steuerungseinrichtung 47 ist im normalen automatisch gesteuerten Schaltungsbetrieb nicht betätigbar, so daß der Fahrer den normalen - automatischen - Schaltbetrieb nicht unterbrechen kann, zumindest nicht unbeabsichtigt. Zu diesem Zweck ist das Notpedal 48 beispielsweise, wie gestrichelt angedeutet, während des normalen Schaltbetriebes in einer hochgeklappten Stellung gehalten, z.B. in einer Nische des Fahrerhauses, in der es für eine Fußbetätigung nicht zugänglich ist. In seine für die Betätigung des Geberzylinders 49 der Notbetrieb-Steuerungseinrichtung 47 geeignete Position gelangt es erst durch durch automatisches oder vom Fahrer manuell durchzuführendes Lösen einer nicht dargestellten Sperre, wonach erst die Geberzylinder-Betätigung mittels des Pedals 48 möglich ist.

Die diesbezüglich zweckmäßige Anordnung des Geberzylinders 49 und Gestaltung des Pedals 48 sind unter ergonomischen Gesichtspunkten und entsprechend den im Fahrerhaus gegebenen räumlichen Verhältnissen zu treffen. Wesentlich ist lediglich, daß das Pedal 48 nur im Notbetrieb der Kupplungseinrichtung 10 betätigbar sein darf.

Zur Erläuterung der Funktion der insoweit ihrem Aufbau nach erläuterten Kupplungseinrichtung 10 mit Notbetrieb-Steuerungseinrichtung 47 werden die folgenden Notbetriebs-Situationen erläutert:

### 1. Fehlfunktion während eines automatisch gesteuerten Einrückens der Kupplung bei einer Fahrzeuggeschwindigkeit, die niedriger ist als der Schwellenwert v_{S}:

Diese Situation ist nach einem Schaltvorgang gegeben, bei dem die Schaltstufe schon eingelegt ist und nunmehr die Kupplung 14 wieder eingerückt wird. In dieser noch intakter Kupplungseinrichtung 10 entsprechenden Ausgangssituation ist das Schutzart-Vorwahlventil 57 in seine Funktionsstellung II geschaltet, in welcher der Ausgangsdruck der Hilfsdruckquelle 38 am Steueranschluß 97 des Schutzart-Vorwahlventils 57 ansteht. Das Notbetrieb-Steuerventil 91 ist erregt und befindet sich in seiner Funktionsstellung I, in welcher der Ausgangsdruck sowohl in die Steuerkammer 88 des Schutzventils 56 als auch in die Steuerkammer 87 des Notbetrieb-Umschaltventils 42 eingekoppelt ist, die sich dadurch beide in ihrer Funktionsstellung I befinden. In dieser Funktionsstellung I des Schutzventils 56 ist dessen Steueranschluß 96 mit dem Entlüftungsausgang 98 dieses Ventils 56 verbunden und dadurch die Eingangskammer 71 des Druckumsetzers 52 drucklos gehalten. Die Kolbenanordnung 63,64,66 des Druckumsetzers 52 befindet sich, durch die Wirkung einer nicht dargestellten Rückstellfeder in ihrer größtem Volumen der hydraulischen Ausgangskammer 72 des Druckumsetzers 52 entsprechenden Grundstellung, die ihrerseits mit dem Ausgleichsbehälter 77 der Kupplungseinrichtung 10 in kommunizierender Verbindung steht und daher drucklos gehalten ist. Dasselbe gilt sinngemäß mit Bezug auf den Kolben 81 des Geberzylinders 49 der Notbetrieb-Steuerungseinrichtung 47. Der Antriebsdruckraum 34 des Nehmerzylinders 32 des Kraftverstärkers 23 ist über den in der Funktionsstellung I des Notbetrieb-Umschaltventils 42 freigegebenen Strömungspfad 43 mit dem Ausgangsdruckraum 26 des motorgesteuerten Geberzylinders 22 verbunden, dessen Kolben 27 noch eine Zwischenstellung zwischen seinen minimalem und maximalem Volumen des Ausgangsdruckraumes 26 einnimmt und sich auf die maximalem Volumen des Ausgangsdruckraumes 26 entsprechende Endposition zubewegt, wodurch sich das Volumen des Ausgangsdruckraumes 26 vergrößert und Hydrauliköl aus dem Nehmerzylinder 32 des Kraftverstärkers 23 zum Geberzylinder 22 hin abströmt, aus dessen Ausgleichsraum 78 Hydrauliköl in den Ausgleichsbehälter 77 verdrängt wird. Als Folge des im hydraulischen Steuerkreis des Proportionalventils 36 abnehmenden Druckes gelangt dieses in seine Entlüftungsstellung II, in welcher der Druck im pneumatischen Antriebszylinder 33 des Kraftverstärkers 23 abgebaut wird.

Tritt in dieser Betriebssituation ein Fehler auf, den die elektronische Steuereinheit 17, falls sie selbst fehlfunktionsbehaftet ist, anhand einer nach Plausibilitätskriterien erfolgenden Verknüpfung von ihr selbst erzeugter Signale erkennen kann oder, falls der Antriebsmotor 28 des Geberzylinders 22 der Kupplungs-Betätigungseinrichtung 21 defekt ist oder dessen Kolben 27 festsitzt, z.B. daran erkennen kann, daß das Ausgangssignal des zur Positionsüberwachung dieses Kolbens 27 vorgesehenen Wegsensors 30 konstant bleibt, so wird die Erregung des Steuermagneten 92 des zur elektrischen Vorsteuerung des Schutzventils 56 und des Notbetrieb-Umschaltventils 42 vorgesehenen Notbetrieb-Steuerventils 91 aufgehoben, wodurch diese Ventile 91,56 und 42 in ihre jeweils federzentrierten Grundstellungen 0 zurückgeschaltet werden. In der nunmehr gegebenen Kombination der Funktionsstellungen des Schutzventils 56 und des Notbetrieb-Umschaltventils 42 ist zum einen der jetzt am Steueranschluß 96 des Schutzventils 56 anstehende Ausgangsdruck der pneumatischen Hilfsdruckquelle 38 über das Druckbegrenzungsventil 54 in die Eingangskammer 71 des Druckumsetzers 52 bis zu dem durch das Druckbegrenzungsventil 54 definierten Betrag einkoppelbar, wodurch in der - hydraulischen - Ausgangskammer 72 Druck aufgebaut wird, der über das Wechsel-Rückschlagventil 62 zum Druckausgang 46 der Notbetrieb-Steuerungseinrichtung 47 und über den in der Grundstellung 0 des Notbetrieb-Umschaltventils 42 freigegebenen Strömungspfad 44 in den Nehmerzylinder 32 des Kraftverstärkers 23 sowie den hydraulischen Steuerkreis des Proportionalventils 36 eingekoppelt wird, das dadurch in seine Druckaufbaustellung I gelangt, in der der Druckausgang 58 der pneumatischen Hilfsdruckquelle 38 auch in den Antriebsdruckraum 37 des pneumatischen Antriebszylinders 33 des Kraftverstärkers 23 einkoppelbar ist, der nunmehr im Sinne der Ausrückbetätigung der Kupplung 14 angesteuert ist. Die hiernach erzielte Schutzfunktion besteht darin, bei niedriger Fahrzeuggeschwindigkeit im Falle einer Fehlfunktion der automatischen Kupplung den Antriebsstrang des Fahrzeuges gleichsam zu unterbrechen.

Die eingetretene Notsituation wird dem Fahrer durch ein optisches und/oder ein akustisches Signal angezeigt und gegebenenfalls gleichzeitig eine das Notpedal 48 in seiner nicht betätigbaren Position haltende Sperre aufgehoben, so daß der Fahrer das Notpedal 48, sofern es nicht selbsttätig in die gebrauchsfähige Position gelangt, in diese bringen und nunmehr zu einem Lösen der Kupplung 14 einsetzen kann. Sobald hierauf der Fahrer das Notpedal 48 betätigt, wodurch der Kolben 81 des über dieses betätigbaren Geberzylinders 49 eine Verschiebung im Sinne eines Druckaufbaues im Ausgangsdruckraum 51 des Geberzylinders 49 erfährt, wird durch diese Verschiebung ein Ausgangssignal des zur Positions- oder Wegüberwachung dieses Kolbens vorgesehenen Positions- oder Wegsensors 103 an die elektronische Steuereinheit 17 abgegeben, durch das ein Ansteuerimpuls für die Steuerwicklung 99 des Schutzart-Vorwahlventils 57 ausgelöst wird, durch den dieses Ventil in seine Funktionsstellung I umgeschaltet wird, in der nunmehr die Eingangskammer 71 des Druckumsetzers 52 über das Druckbegrenzungsventil 54 und das in seiner Grundstellung 0 verharrende Schutzventil 56 und den Entlüftungsausgang 102 des Schutzart-Vorwahlventils 57 entlüftet wird.

Die Kolbenanordnung 63,64,66 des Druckumsetzers 52 kann jetzt die Rückzugsbewegung ausführen, die wieder in die maximalem Volumen der Ausgangskammer 72 entsprechende Endstellung zurückführt.

Um hierbei sicherzustellen, daß Hydrauliköl in die Ausgangskammer 72 des Druckumsetzers 52 auch dann nachströmen kann, wenn durch die Betätigung des Notpedals der Druck in dem Ausgangsdruckraum 51 des mittels des Pedals betätigbaren Geberzylinders 49 so groß geworden ist, daß das Wechsel-Rückschlagventil 62 in seine die Ausgangskammer 72 des Druckumsetzers 52 gegen das Notbetrieb-Umschaltventil 42 und damit auch gegen den Kraftverstärker 23 absperrende Funktionsstellung gelangt ist, ist ein Ausgleichs-Rückschlagventil 106 vorgesehen, das durch relativ höheren Druck im Ausgleichsbehälter 77 des hydraulischen Kreises der Kupplungseinrichtung 10 als in der Ausgangskammer 72 des Druckumsetzers 52 in Öffnungsrichtung beaufschlagt und sonst sperrend ist, wobei der durch dieses Rückschlagventil 106 freigebbare Strömungspfad im bodenseitigen Teil der Gehäusebohrung 68 des Druckumsetzers 52 in dessen Ausgangskammer 72 mündet, d.h. in einem Bereich derselben, der auch in der minimalem Volumen der Ausgangskammer 72 des Druckumsetzers 52 nicht durch deren Kolbenanordnung 66,63,64 abgesperrt ist.

Der in dem mittels des Notpedals 48 betätigbaren Geberzylinders 49 entwickelte Druck wird über das in seiner Grundstellung 0 befindliche Notbetrieb-Umschaltventil 42 in den Nehmerzylinder 32 des Kraftverstärkers 23 eingekoppelt und wirkt über die hydraulische Steuerleitung 107 auch auf das Proportionalventil 36, das dadurch in seine Funktionsstellung II gelangt, in welcher der Druckausgang 58 der pneumatischen Hilfsdruckquelle 8 auch in den Antriebsdruckraum 97 des pneumatischen Antriebszylinders 33 des Kraftverstärkers 23 zur Verstärkung der das Ausrücken der Kupplung 14 vermittelnden Betätigungskraft eingekoppelt wird.

Entsprechend dem Wunsch des Fahrers wird die Kupplung 14 ausgerückt, der nunmehr durch Betätigung des Gebergeräts 16 die von ihm als zweckmäßig angesehene Schaltstufe des Getriebes 11 einlegen und durch Zurücknehmen des Notpedals 48 das Wiedereinrücken der Kupplung 14 steuern kann.

Das Wechsel-Rückschlagventil 62 bleibt hierbei in seiner den Durchgang vom Nehmerzylinder 32 des Kraftverstärkers 23 der Kupplungs-Betätigungseinrichtung 21 zu dem Ausgangsdruckraum 51 des pedalgesteuerten Geberzylinders 49 freigebenden Funktionsstellung mindestens so lange, bis über den Ausgleichsströmungspfad 83, aus dem Ausgleichsbehälter 77 wieder Hydrauliköl in den Ausgangsdruckraum 51 des mittels des Notpedals 48 betätigbaren Geberzylinders 49 nachströmen kann.

Die solchermaßen erzielte Notbetrieb-Ausrückbetätigung der Kupplung 14, die dadurch ermöglicht wurde, daß das Schutzart-Vorwahlventil 57 durch die Betätigung des Notpedals 48 in seine Funktionsstellung I geschaltet worden ist, hätte sich auch dann ergeben, wenn das Fahrzeug sich mit einer Geschwindigkeit bewegt hätte, die größer als der Schwellenwert v_{S} ist und daher sich das Schutzart-Vorwahlventil 57 - von vornherein - in seiner Funktionsstellung I befunden hätte.

### 2. Die Fehlfunktion tritt während eines automatischen Ausrückens der Kupplung ein, wobei die Fahrzeuggeschwindigkeit größer ist als der Schwellenwert v_{S}:

Solange die Kupplungseinrichtung 10 noch intakt ist, nehmen das Notbetrieb-Steuerventil 91 und das über dieses angesteuerte Schutzventil 56 sowie das Notbetrieb-Umschaltventil 42 ihre Schaltstellungen I ein. Das Schutzart-Vorwahlventil 57 ist in seiner Funktionsstellung I, der Entlüftungsstellung.

Die Eingangskammer 71 des Druckumsetzers 52 ist über das Druckbegrenzungsventil 54 und das in seiner Entlüftungsstellung I befindliche Schutzventil 56 drucklos gehalten, mit der Folge, daß die Kolbenanordnung 66,63,64 des Druckumsetzers 52 ihre mit größter Volumen seiner hydraulischen Ausgangskammer 72 verknüpfte Grundstellung einnimmt. Dasselbe gilt sinngemäß für den Geberzylinder 49 der Notbetrieb-Steuerungseinrichtung, dessen Ausgangskammer 51 ebenso wie die Ausgangskammer 72 des Druckumsetzers 52 drucklos ist, da sie mit dem Ausgleichsbehälter 77 der Kupplungseinrichtung 10 in kommunizierender Verbindung gehalten ist. Der elektrische Antriebsmotor 28 des Geberzylinders 22 ist in demjenigen Drehsinn angetrieben, daß der Kolben 27 des Geberzylinders 22 der Kupplungs-Betätigungseinrichtung 21 sich im Sinne einer Verringerung des Ausgangsdruckraumes 26 dieses Geberzylinders 22 bewegt, der über das in seiner Funktionsstellung I befindliche Notbetrieb-Umschaltventil 42 Hydrauliköl zum Nehmerzylinder 32 fördert, wobei der im Antriebsdruckraum 34 des Nehmerzylinders 32 des Kraftverstärkers 23 herrschende Druck, der auch am hydraulischen Steueranschluß 108 des Proportionalventils 36 des Kraftverstärkers 23 herrscht, das dadurch eine funktionell zu seiner Funktionsstellung II entsprechende Gleichgewichtsstellung einnimmt, in der ein zu diesem hydraulischen Druck proportionaler pneumatischer Druck, der mittels des Proportionalventils 36 vom Ausgangsdruck der pneumatischen Hilfsdruckquelle 38 abgeleitet ist, auch in den Antriebsdruckraum 37 des pneumatischen Antriebszylinders 33 des Kraftverstärkers 23 eingekoppelt ist, der über den Betätigungsstößel 24 das Kupplungs-Betätigungsglied 19 im Sinne eines Ausrückens der Kupplung 14 schwenkt.

Eine in dieser Ausgangssituation auftretende Fehlfunktion des automatischen Kupplungssystems, die wiederum dazu führt, daß das die Vorsteuerung des Schutzventils 56 und des Notbetrieb-Umschaltventils 42 vermittelnde Notbetrieb-Steuerventil 91 in seine Grundstellung 0, seine Entlüftungsstellung, zurückfällt, wobei auch die Ansteuerung des elektrischen Antriebsmotors 28 des Geberzylinders 22 der Kupplungs-Betätigungseinrichtung 21 aufgehoben wird, hat nunmehr zur Folge, daß das Schutzventil 56 und das Notbetrieb-Umschaltventil 42 in ihre jeweiligen Grundstellungen 0 zurückgeschaltet werden, wodurch zum einen, die Eingangskammer 71 des Druckumsetzers 52, nunmehr über das in der Entlüftungsstellung I befindliche Schutzart-Vorwahlventil 57, druckentlastet bleibt und, zum anderen, der Antriebsdruckraum 34 des Nehmerzylinders 32 des Kraftverstärkers 23 sowie der hydraulische Steueranschluß 108 seines Proportionalventils 36 über das in seiner Grundstellung befindliche Notbetrieb-Umschaltventil 42 mit dem Druckausgang 46 der Notbetrieb-Steuerungseinrichtung 47 verbunden sind, der seinerseits wegen seiner mit dem Ausgleichsbehälter 77 bestehenden kommunizierenden Verbindung drucklos gehalten ist, so daß, zum einen, Hydrauliköl aus dem Antriebsdruckraum 34 des Nehmerzylinders des Kraftverstärkers 23 zum Ausgleichsbehälter 77 der Kupplungseinrichtung 10 abströmen kann und, zum anderen, das Proportionalventil 36 des Kraftverstärkers 23 in eine seiner Funktionsstellung I, seiner Entlüftungsstellung entsprechende Gleichgewichtsstellung gelangt, in der der Antriebsdruckraum 37 des pneumatischen Antriebszylinders 33 des Kraftverstärkers 23 druckentlastet ist und somit die Kupplung 14 selbsttätig wieder in ihre die Antriebswelle 13 des Fahrzeugmotors mit der Antriebswelle 12 des Getriebes 11 kraftschlüssig-starr verbindende Funktionsstellung eingerückt wird.

In dieser Situation wird somit durch die NotbetriebSteuerungseinrichtung 47 eine Schutzfunktion dahingehend erzielt, daß der Antriebsstrang des Fahrzeuges geschlossen bleibt, d.h., z.B. bei einer Bergabfahrt, die Bremswirkung des Motors im Schubbetrieb erhalten bleibt. Es ist vorausgesetzt, daß der den Elektromotor 28 umfassende Antrieb, z.B. ein Spindel-Trieb, des Geberzylinders 22 der Kupplungs-Betätigungseinrichtung 21 selbsthemmend ist, so daß nach einem Abschalten der elektronischen Steuereinheit und dadurch bedingtem Abfallen der Ansteuerung des Antriebsmotors 28 der Kolben 27 des Geberzylinders 22 in seiner beim Abfallen des Ansteuersignals für seinen Antriebsmotor 28 eingenommenen Position verharrt.

Der Fahrer kann jetzt, nachdem das Notpedal 48 für die Notbetätigung freigegeben ist, durch Betätigung des Geberzylinders 49 der Notbetrieb-Steuerungseinrichtung 47 Druck im Nehmerzylinder 32 sowie am hydraulischen Steueranschluß 108 des Proportionalventils 36 des Kraftverstärkers 23 und damit auch im pneumatischen Antriebszylinder 33 des Kraftverstärkers 23 aufbauen und gezielt wieder abbauen und dadurch die für die Durchführung von Schaltvorgängen erforderlichen Aus- und Einrückbewegungen der Kupplung 14 steuern, wie schon anhand des ersten Fehlfunktionsbeispiels beschrieben.

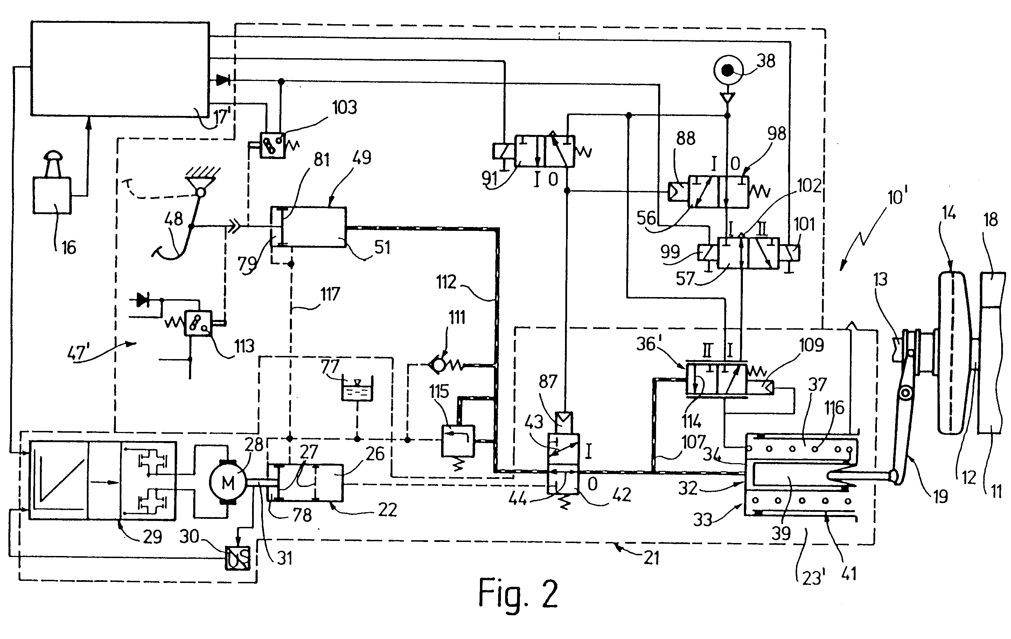

Zur Erläuterung eines weiteren Ausführungsbeispiels einer erfindungsgemäßen Notkuppeleinrichtung sei nunmehr auf die diesbezüglichen Einzelheiten der Fig. 2 verwiesen, in der eine mit der Kupplungseinrichtung 10 gemäß Fig. 1 funktionsäquivalente Kupplungseinrichtung insgesamt mit 10' bezeichnet ist, die sich gegenüber der Kupplungseinrichtung 10 durch einen deutlich vereinfachten Aufbau auszeichnet, wobei die bauliche Vereinfachung - im wesentlichen - darin besteht, daß ein Druckumsetzer für den Notbetrieb nicht erforderlich ist und der diese Einsparung ermöglichende funktionelle Unterschied darin besteht, daß im Notbetrieb der Kupplungseinrichtung 10', d.h. im Fehlfunktionsfall derselben, der Ausgangsdruck der pneumatischen Hilfsdruckquelle 38 gleichsam direkt über das in diesem Falle in seiner Grundstellung 0 befindliche Schutzventil 56, das Schutzart-Vorwahlventil 57, sofern dieses sich in seiner Funktionsstellung II befindet und das in seiner Grundstellung I befindliche Proportionalventil 36 in den pneumatischen Antriebsdruckraum 37 des - insoweit modifizierten - Kraftverstärkers 23 der Kupplungs-Betätigungseinrichtung 21 einkoppelbar ist.

Soweit in Anbetracht der funktionellen und weitgehenden baulichen Übereinstimmung der Kupplungseinrichtungen 10 gemäß Fig. 1 und 10' gemäß Fig. 2 für Bau- und Funktionselemente derselben jeweils dieselben Bezugszeichen angegeben sind, eine Beschreibung derselben anhand der Fig. 2 jedoch nicht erfolgt, soll die Verwendung dieser Bezugszeichen den Hinweis auf die anhand der Fig. 1 erfolgte Beschreibung der solchermaßen bezeichneten Bau- und Funktionselemente beinhalten, um Wiederholungen zu vermeiden.

In Anbetracht der weitgehenden baulichen Übereinstimmung beider Ausführungsbeispiele wird die Erläuterung des Ausführungsbeispiels gemäß Fig. 2 auf dessen Funktionsbeschreibung beschränkt und im Zuge dieser Funktionsbeschreibung eine noch erforderlich erscheinende Erläuterung der baulichen Unterschiede gegeben.

Im Normalbetrieb, d.h. bei intaktem Zustand der Kupplungseinrichtung 10' arbeitet deren Kupplungs-Betätigungseinrichtung 21 in derselben Weise wie die anhand der Fig. 1 erläuterte Kupplungs-Betätigungseinrichtung 21 der Kupplungseinrichtung 10 gemäß Fig. 1

Zur Erläuterung der Notbetriebseigenschaften der Kupplungseinrichtung 10' gemäß Fig. 2 sei zunächst wieder der Fall angenommen, daß die Fahrzeuggeschwindigkeit v_{F} kleiner als der Schwellenwert v_{S} sei, und daß eine Fehlfunktion während eines automatisch gesteuerten Ausrückens der Kupplung 14 auftrete.

Mit Eintritt des Fehlers fällt das elektrisch gesteuerte Notbetrieb-Steuerventil 91 in seine Grundstellung 0 - seine Entlüftungsstellung - zurück, wodurch auch das Schutzventil 56 und das Notbetrieb-Umschaltventil 42 in ihre Grundstellungen 0 zurückgeschaltet werden. Über das Schutzventil 56 und das in seiner Funktionsstellung II befindliche Schutzart-Vorwahlventil, in der der Steueranschluß 96 des Schutzventils 56 mit dem Steueranschluß 97 des Schutzart-Vorwahlventils 57 und dieser über das in seiner Funktionsstellung I befindliche Proportionalventil 36' mit dem Antriebsdruckraum 37 des pneumatischen Antriebszylinders 33 des Kraftverstärkers 23' der Kupplungs-Betätigungseinrichtung 21 verbunden ist, ist der Ausgangsdruck der Hilfsdruckquelle 38 in den pneumatischen Antriebszylinder 33 des Kraftverstärkers 23' eingekoppelt sowie in die pneumatische Steuerkammer 109 des Proportionalventils 36', wodurch zum einen der Kraftverstärker 23' im Sinne eines Ausrückens der Kupplung 14 betätigt ist und zum anderen das Proportionalventil 36' in seiner Funktionsstellung I gehalten wird; desweiteren ist durch das Zurückschalten des Notbetrieb-Umschaltventils 42 in dessen Grundstellung 0 der Geberzylinder 22, dessen Kolben 27 in der bis zum Eintreten des Fehlers erreichten Zwischenstellung stehengeblieben ist, gegen den hydraulischen Nehmerzylinder 32 des Kraftverstärkers 23' abgesperrt und dieser dafür mit dem Ausgangsdruckraum 51 des mittels des Notpedals 48 betätigbaren Geberzylinder 49 verbunden. Während der in dieser Situation allein durch den pneumatischen Antriebszylinder 33 des Kraftverstärkers 23' angetriebene Kolbenverbund 39,41 den das Lösen der Kupplung 14 vermittelnden Hub ausführt, kann Hydraulikmedium in den sich vergrößernden Antriebsdruckraum 34 des Nehmerzylinders 32 des Kraftverstärkers 23' über ein Rückschlagventil 111 nachströmen, das in der aus der Fig. 2 ersichtlichen Schaltungsanordnung zwischen die den Ausgangsdruckraum 51 des mittels des Notpedals 48 betätigbaren Geberzylinders 49 mit dem NotbetriebUmschaltventil verbindende Druckmittelleitung 112 und den Ausgleichsbehälter 77 der Kupplungseinrichtung 10' geschaltet ist, der auch mit den Ausgleichskammern 78 und 79 des motorgesteuerten Geberzylinders 22 sowie des mittels des Pedals 48 betätigbaren Geberzylinders 49 in permanent-kommunizierender Verbindung steht und in den Grundstellungen ihrer Kolben 27 bzw. 81, die jeweils maximalem Volumen ihrer Ausgangskammern 26 bzw. 51 entsprechen, auch mit diesen verbunden ist.

Die durch die Notbetrieb-Steuerungseinrichtung 47' in der geschilderten Fehlersituation vermittelte Schutzfunktion besteht darin, daß, wie auch beim Ausführungsbeispiel gemäß Fig. 1, die Kupplung 14 in den als situationsadäquat - sicher - angesehenen ausgerückten Zustand übergeht.

Um die Kupplungseinrichtung 10' auf den Notbetrieb einzustellen, muß der Fahrer zunächst das Pedal 48, dessen Bereitschaftsstellung durch das Ausgangssignal eines Positionsschalters 113 signalisiert wird, im Sinne eines Druckaufbaus im Ausgangsdruckraum 51 des mittels des Pedals 48 betätigbaren Geberzylinders 49 kräftig betätigen. Das hierbei aus dem Ausgangsdruckraum 51 des Geberzylinders 49 verdrängte Hydrauliköl, das vom Nehmerzylinder 32 nicht aufgenommen werden kann, da dieser schon eine größtmögliche Hydraulikölmenge aufgenommen hat, gelangt über ein zu dem Rückschlagventil 111 parallel geschaltetes Druckbegrenzungsventil 115 zum drucklosen Ausgleichsbehälter 77. Die durch die Pedalbetätigung erzielte Verschiebung des Kolbens 81 des Geberzylinders 49 löst ab einem Mindesthub des Kolbens 81 ein Ausgangssignal des Positionssensors 103 aus, durch das das Schutzart-Vorwahlventil 57 in seine Funktionsstellung I - seine Entlüftungsstellung - umgeschaltet wird, in welcher der Antriebsdruckraum 37 des pneumatischen Antriebszylinders 33 des Kraftverstärkers 23' über das Proportionalventil 36' und den Entlüftungsausgang 102 des Schutzart-Vorwahlventils 57 entlüftbar ist.

Da durch die Betätigung des Geberzylinders 49 das Proportionalventil 36' des Kraftverstärkers 23' in eine seiner Funktionsstellung II entsprechende Gleichgewichtsstellung gelangt war, bleibt der pneumatische Antriebszylinder 33 des Kraftverstärkers 23', nunmehr über den in der Funktionsstellung II des Proportionalventils 36' freigegebenen Durchflußpfad 114 mit dem Druckausgang 58 der pneumatischen Hilfsdruckquelle 38 verbunden und daher die Kupplung 14 gelöst.

Der Fahrer kann in dieser Situation die gewünschte Schaltstufe des Getriebes 11 einlegen, falls diese nicht schon bevor des Auftretens der Fehlfunktion eingelegt worden ist und eingelegt geblieben ist.

Nimmt der Fahrer hierauf das Notpedal 48 zurück, wobei das Ausgangssignal des Positionsgebers 103 zwar abfällt, das Schutzart-Vorwahlventil 57 jedoch in seiner Funktionsstellung II, die dem Normalbetrieb bei hoher Fahrzeuggeschwindigkeit zugeordnet ist, verbleibt, so kann der den Kolben 39 des hydraulischen Nehmerzylinders 32 und den Kolben 41 des pneumatischen Antriebszylinders 33 des Kraftverstärkers 23 umfassende Kolbenverbund durch die Wirkung seiner Rückstellfeder 116 seinen Rückzugshub ausführen, durch den Hydrauliköl aus dem Antriebsdruckraum 34 des Nehmerzylinders 32 zu dem mittels des Notpedals 48 betätigbaren Geberzylinder 49 hin verdrängt wird und, sobald dessen Kolben 81 wieder seine mit größtem Volumen des Ausgangsdruckraumes 51 dieses Geberzylinders verknüpfte Position erreicht hat, über die diesen Ausgangsdruckraum 51 mit dem Ausgleichsbehälter 77 der Kupplungseinrichtung 10' verbindende Druckmittelleitung 117 vollends abströmen, bis auch der Kolben 39 des Nehmerzylinders 32 des Kraftverstärkers 23' die mit minimalem Volumen seines Antriebsdruckraumes 34 verknüpfte Grundstellung wieder einnimmt.

Die Kupplungseinrichtung 10' gemäß Fig. 2 ist jetzt - gleichsam "endgültig" - für den Notbetrieb vorbereitet, für den das Schutzart-Vorwahlventil 57 in der einem Normalbetrieb des Fahrzeuges bei hoher Fahrzeuggeschwindigkeit entsprechenden Schaltstellung I gehalten bleibt und ein Ausrücken der Kupplung in der - "gewohnten" - Weise dadurch steuerbar ist, daß der Fahrer das Notpedal 48 niederdrückt und das Ausrücken der Kupplung 14 durch Zurücknehmen des Notpedals 48 gesteuert wird, wobei in diesem Notbetrieb der Kolben 81 des mittels des Pedals 48 betätigbaren Geberzylinders 49 seinen gesamten, zwischen seinen beiden Endstellungen möglichen Hub ausführt.

Zur weiteren Funktionserläuterung der Kupplungseinrichtung 10' sei der Fall angenommen, daß der Fehler im Verlauf einer automatisch gesteuerten Ausrückbetätigung der Kupplung 14 auftritt, während die Fahrzeuggeschwindigkeit v_{F} größer als der Schwellenwert v_{S} ist, das Schutzart-Vorwahlventil 57 sich somit in seiner Funktionsstellung I und das Notbetrieb-Umschaltventil 42 in seiner Normalbetriebstellung I befinden und der Kolben 27 des motorgesteuerten Geberzylinders 22 seinen Hydrauliköl zum Nehmerzylinder 22 verdrängenden Hub ausführt, wodurch das Proportionalventil 36' über seinen hydraulischen Steuerpfad 107 in eine der Funktionsstellung II entsprechende Gleichgewichtsstellung gesteuert ist und demgemäß auch der pneumatische Antriebszylinder 33 des Kraftverstärkers 23' im Sinne der Ausrückbetätigung der Kupplung 14 mit pneumatischem Hilfsdruck beaufschlagt ist. Der Kolben 81 des Geberzylinders 49 der Notbetrieb-Steuerungseinrichtung 47' befindet sich in seiner Grundstellung, in der der Ausgangsdruckraum 51 dieses Geberzylinders 49 mit dem Ausgleichsbehälter 77 der Kupplungseinrichtung 10' kommunizierend verbunden ist.

Tritt unter diesen Bedingungen die Fehlfunktion auf, mit der Folge, daß das Notbetrieb-Steuerventil 91 in seine Grundstellung 0 und damit auch das Schutzventil 56 und das Notbetrieb-Umschaltventil 42 in ihre Grundstellung 0 zurückfallen, so wird zum einen der Antriebsdruckraum 34 des Nehmerzylinders 32 über den in der Grundstellung 0 des Notbetrieb-Umschaltventils 42 freigegebenen Strömungspfad 44 und über den Ausgangsdruckraum 51 des Geberzylinders 49 der Notbetrieb-Steuerungseinrichtung 47' mit dem drucklosen Ausgleichsbehälter 77 verbunden, so daß über diesen Strömungspfad Druckmittel aus dem Antriebsdruckraum 34 des Nehmerzylinders 32 entweichen kann und zum anderen das Proportionalventil 36' wegen des Abfallens des hydraulischen Steuerdruckes und durch die Wirkung seiner Ventilfeder in eine der Funktionsstellung I entsprechende Gleichgewichtsstellung gebracht, in der der Antriebsdruckraum 37 des pneumatischen Antriebszylinders 33 des Kraftverstärkers 23' über das Proportionalventil 36' und das in seiner Funktionsstellung II befindliche Schutzart-Vorwahlventil 57 entlüftet wird und daher der Kolbenverbund 39,41 des Kraftverstärkers 23' seinen mit einem Einrücken der Kupplung 14 verknüpften Rückzugshub ausführt.

Die durch die Notbetrieb-Steuerungseinrichtung 47' in dieser Situation vermittelte Schutzwirkung besteht somit darin, daß die Kupplung in den - als "sicher" angesehenen - eingerückten Zustand übergeht.

Die Kupplungseinrichtung 10' ist hiernach, ohne daß der Fahrer eine weitere Vorbereitungsbetätigung des Pedals 48 vornehmen muß, von vornherein auf den Notbetrieb mit gewohntem Bewegungsablauf der Betätigungsbewegungen vorbereitet.

## Patentansprüche

1. Notkuppeleinrichtung für Nutzfahrzeuge, bei denen zum Wechsel von Schaltstufen eines mehrstufigen Wechselgetriebes (11) erforderliche Aus- und Einkuppelvorgänge, die durch eine Kupplungssteuereinheit (17) elektronisch steuerbar sind, mittels einer hydropneumatischen Kupplungs-Betätigungseinrichtung selbsttätig durchführbar sind, und im Falle einer Fehlfunktion der automatischen Schaltbetriebssteuerung (17) zunächst eine Schutzventilanordnung (56,57,91) wirksam wird, durch die bei einer Fehlfunktion der Steuerung die Kupplung (14) vermittels der Kupplungs-Betätigungseinrichtung bei langsamer Fahrt (ν<νₛ) ausgerückt und bei schneller Fahrt (ν>νₛ) eingerückt oder eingerückt gehalten wird, wonach der Fahrer die in einem Notfahrbetrieb für einen Wechsel der Schaltstufen erforderlichen Aus-und Einrückbetätigungen der Kupplung (14) mittels der Notkuppeleinrichtung (47;47') steuern kann, wobei
- die Kupplungs-Betätigungseinrichtung einen mittels eines steuerbaren Elektromotors (28) antreibbaren hydraulischen Geberzylinder (22) umfaßt, dessen Ausgangsdruckraum (26) in der Normalbetriebsstellung (I) eines Notbetrieb-Umschaltventils (42) mit dem Antriebsdruckraum (34) eines hydraulischen Nehmerzylinders (32) verbunden ist, der
- das Antriebselement eines die Kupplungsbetätigung vermittelnden hydropneumatischen Kraftverstärkers (23) ist, welcher als weiteres Antriebsund Verstärkungselement einen pneumatischen Antriebszylinder (33) umfaßt, der
- über ein mit dem im Nehmerzylinder (32) herrschenden Druck steuerbares Proportionalventil (36;36') mit einem in Proportionalität zu diesem hydraulischen Druck von einer pneumatischen Hilfsdruckquelle (38) abgeleiteten Antriebsdruck beaufschlagbar ist, wobei
- die Notkuppeleinrichtung.(47;47') iherseits einen hydraulischen Geberzylinder (49) mit einem Geberzylinderkolben umfaßt, welcher in einer dem Schutz- und dem Notfahrbetrieb zugeordneten Funktionsstellung (0) des Notbetrieb-Umschaltventils (42) anstelle des motorgesteuerten Geberzylinders (22) an den Nehmerzylinder (32) des Kraftverstärkes (23;23') angeschlossen ist, wobei der Geberzylinder (49) weiterhin
- in einer dem Notfahrbetrieb zugeordneten Notbetriebs- Funktionsstellung (II) eines bistabilen Schutzart-Vorwahlventils (57) der Schutzventilanordnung (56,57,91) bei einer vom Fahrer ausgelösten Betätigung die Ansteuerung des Kraftverstärkers (23;23') zur Ausführung von Aus- und Einrückvorgängen der Kupplung (14) steuert und wobei
- ein auf eine Positionsänderung eines Betätigungselements der Notkuppeleinrichtung (47;47') ansprechender, elektronischer oder elektromechanischer Positionssensor (103) vorgesehen ist, der nach einer Betätigung der Notkuppeleinrichtung ein dafür charakteristisches elektrisches Umschaltsignal erzeugt, durch welches die dem Notfahrbetrieb zugeordneten Funktionsstellung (II) mindestens des bistabilen Schutzart-Vorwahlventils (57) mittelbar herstellbar ist,
**dadurch gekennzeichnet**, daß
der hydraulische Geberzylinder (49) der Notkuppeleinrichtung (47;47') mittels eines an dem Geberzylinderkolben (81) abstützbaren Notpedals (48) betätigbar ist, das nur im Notfahrbetrieb für eine Betätigung durch den Fahrer freigegeben ist, daß
vom Positionssensor (103) die Position des Geberzylinderkolbens (81) erfaßbar und das Umschaltsignal für das Schutzart-Vorwahlventil (57) nach der Ausführung eines kurzen Anfangsabschnittes des Druckaufbauhubes des Geberzylinderkolbens (81) erzeugbar ist, und
daß das Notbetrieb-Umschaltventil (42), das den alternativen Anschluß des motorgesteuerten Geberzylinders (22) und des mittels des Notpedals (48) betätigbaren Geberzylinders (49) der Notbetrieb-Steuerungseinrichtung (47;47') vermittelt, und ein Schutzventil (56) der Schutzventilanordnung (56,57,91), die im Schutzbetrieb die Ansteuerung des Kraftverstärkers (23;23') vermittelt, als pneumatisch betätigbare Zwei-Stellungs-Ventile mit dem Schutz- sowie dem Notbetrieb zugeordneter, federzentrierter Grundstellung (0) ausgebildet und mittels eines als Magnetventil ausgebildeten Notbetrieb-Steuerventils (91) gemeinsam elektrisch vorsteuerbar sind.

2. Notkuppeleinrichtung nach Anspruch 1, **dadurch gekennzeichnet**, daß das Notpedal (48) versenkt in einer Nische des Fahrerhauses angeordnet ist und durch automatisch erfolgendes oder vom Fahrer vorzunehmendes Entfernen einer Abdeckung und/oder Einschwenken in eine an einer Kolbenstange des Geberzylinders axial abgestützte Position in die für die Betätigbarkeit desselben geeignete Anordnung bringbar ist.

3. Notkuppeleinrichtung nach Anspruch 1 oder Anspruch 2, **dadurch gekennzeichnet,** daß das Schutzventil (56) zwischen den pneumatischen Druckversorgungsanschluß des hydraulisch ansteuerbaren Proportionalventils (36'), der in der Grundstellung (I) dieses Ventils (36') mit dem Antriebsdruckraum (37) des pneumatischen Antriebszylinders (33) des Kraftverstärkers (23') verbunden ist, und die pneumatische Hilfsdruckquelle (38) geschaltet ist und eine Grundstellung (0) hat, in der die Hilfsdruckquelle (58) mit der Antriebskammer (37) des pneumatischen Antriebszylinders (33) des Kraftverstärkers (23') verbindbar oder verbunden ist.

4. Notkuppeleinrichtung nach Anspruch 3, **dadurch gekennzeichnet,** daß dem Schutzventil (56), in hydraulischer Reihenschaltung, das Schutzart-Vorwahlventil (57) unmittelbar vor- oder nachgeschaltet ist, das eine Funktionsstellung (II) hat, in der die Hilfsdruckquelle (58) mit dem Proportionalventil (36') verbindbar ist, und eine zu dieser alternative Funktionsstellung (I) hat, in der eine Verbindung der Hilfsdruckquelle (38) mit dem Proportionalventil (36') über das Schutzventil (56) ausgeschlossen ist.

5. Notkuppeleinrichtung nach Anspruch 3 oder 4 **dadurch gekennzeichnet,** daß zwischen den Druckausgang des mittels des Notpedals (48) betätigbaren Geberzylinders (49) und dessen Ausgleichsbehälter (77) ein Druckbegrenzungsventil (115) geschaltet ist.

6. Notkuppeleinrichtung nach Anspruch 5, **dadurch gekennzeichnet,** daß zu dem Druckbegrenzungsventil (115) ein Rückschlagventil (111) hydraulisch parallel geschaltet ist, das durch relativ höheren Druck am Druckausgang des pedalgesteuerten Geberzylinders (49) als im Ausgleichsbehälter (77) sperrend gehalten ist und bei niedrigerem Druck im Geberzylinder (49) als im Ausgleichsbehälter (77) seine Durchflußstellung einnimmt.

7. Notkuppeleinrichtung nach Anspruch 1 oder Anspruch 2, **dadurch gekennzeichnet,** daß ein weiterer hydraulischer Geberzylinder vorgesehen ist, der im Falle einer Fehlfunktion der Kupplungseinrichtung (10) im Sinne des Aufbaues eines in den Nehmerzylinder (32) des Kraftverstärkers (23) einkoppelbaren, zur Ausrückbetätigung der Kupplung (14) nutzbaren Druckes selbsttätig angesteuert ist.

8. Notkuppeleinrichtung nach Anspruch 7, **dadurch gekennzeichnet,** daß der weitere Geberzylinder als die hydraulische Ausgangsstufe (66,68,72) eines pneumatisch-hydraulischen Druckumsetzers (52) mit pneumatischer Eingangsstufe (71,64,67) ausgebildet ist, deren Eingangskammer (71), durch die Schutzventilanordnung selbsttätig gesteuert, mit dem Ausgangsdruck der pneumatischen Hilfsdruckquelle (38) beaufschlagbar ist.

9. Notkuppeleinrichtung nach Anspruch 8, **dadurch gekennzeichnet,** daß dem Schutzventil (56) in hydraulischer Reihenschaltung das Schutzart-Vorwahlventil (57) unmittelbar vor- oder nachgeschaltet ist, das in einer von zwei alternativen Funktionsstellungen (I oder II) die Verbindung der pneumatischen Hilfsdruckquelle (38) mit der Eingangskammer (71) des Druckumsetzers (52) vermittelt und in der dazu alternativen Funktionsstellung (II oder I) diese Verbindung ausschließt.

10. Notkuppeleinrichtung nach einem der Ansprüche 7 bis 9, **dadurch gekennzeichnet,** daß zum alternativen Anschluß des mittels des Notpedals (48) betätigbaren Geberzylinders (49) und des pneumatisch ansteuerbaren hydraulischen Geberzylinders (66, 68,72) an das Notbetrieb-Umschaltventil (42) ein druckgesteuertes Umschaltventil (62) vorgesehen ist, das durch den relativ höheren Ausgangsdruck des jeweiligen Geberzylinders (49 oder 66,68,72) in die diesen mit dem Notbetrieb-Umschaltventil (42) verbindende und den anderen Geberzylinder gegen dieses absperrende Funktionsstellung steuerbar ist.

11. Notkuppeleinrichtung nach Anspruch 10, **dadurch gekennzeichnet,** daß das druckgesteuerte Umschaltventil (62) als Wechsel-Rückschlagventil ausgebildet ist.

12. Notkuppeleinrichtung nach einem der Ansprüche 8 bis 11, **dadurch gekennzeichnet,** daß der Eingangskammer (71) des Druckumsetzers (52) ein Druckbegrenzungsventil (54) vorgeschaltet ist.

13. Notkuppeleinrichtung nach Anspruch 12, **dadurch gekennzeichnet,** daß das Druckbegrenzungsventil (54) zwischen die Antriebskammer (71) des Druckumsetzers (52) und die das Schutzventil (56) und das Schutzart-Vorwahlventil (57) umfassende hydraulische Reihenschaltung geschaltet ist.

14. Notkuppeleinrichtung nach einem der Ansprüche 1 bis 13, **dadurch gekennzeichnet,** daß der motorgesteuerte Geberzylinder (22) und der durch Betätigung des Notpedals (48) steuerbare Geberzylinder (49) einen gemeinsamen Ausgleichs- bzw. Vorratsbehälter (77) haben, der gegebenenfalls auch als Ausgleichsbehälter für den weiteren, durch die Ansteuerung des Druckumsetzers (52) betätigbaren, für den Schutzbetrieb vorgesehenen Geberzylinder (66,68,72) ausgenutzt ist.

## Claims

1. An emergency clutch device for utility vehicles, in which, in order to change gear stages of a multiple-stage change-speed gear (11), the requisite de-clutching and clutching procedures, which can be electronically controlled by means of a clutch control unit (17), can be automatically implemented by means of a hydro-pneumatic clutch-operating device, and in the event of an operating failure in the automatic operating control (17) a protective valve arrangement (56, 57, 91) is activated in the first instance whereby, if the control system fails, the clutch (14) is released by the clutch-operating device during slow travel (ν<νs) and engaged or kept engaged during fast travel (ν>νs), after which the driver can control the de-clutching and clutching operations needed to change the gear stages in emergency operation by means of the emergency clutch device (47; 471), in which
- the clutch-operating device has a hydraulic transmitter cylinder (22) driven by means of a controllable electric motor (28), the output pressure chamber (26) of which is connected, when an emergency switch valve (42) is in the normal operating position (I), to the drive pressure chamber (34) of a hydraulic output cylinder (32) which
- is the driving element of a hydro-pneumatic booster (23) transmitting power to operate the clutch, which has a pneumatic drive cylinder (33) providing an additional drive and booster element, to which
- drive pressure diverted from a pneumatic auxiliary pressure source (38) can be applied via a proportional valve (36; 36'), which can be controlled with the pressure prevailing in the output cylinder (32), in proportion to this hydraulic pressure, wherein
- the emergency clutch device (47; 47') in turn has a hydraulic transmitter cylinder (49) with a transmitter-cylinder piston, which, when the emergency-operation switch valve (42) is in an operating position (0) assigned to the protective and emergency operating mode, is linked to the output cylinder (32) of the power booster (23; 23') instead of the motor-driven transmitter cylinder (22), in which the transmitter cylinder (49) in addition,
- when a bi-stable protective-type preselection valve (57) of the protective valve arrangement (56, 57, 91) is in an emergency operating position (II) assigned to emergency mode activated by the driver, controls the selection of the power booster (23; 23') for implementing de-clutching and clutching procedures of the clutch (14) and in which
- an electronic or electro-mechanical position sensor (103) is provided responding to a change in position of an operating element of the emergency clutch device (47; 47'), which, after the emergency clutch device is operated, generates an electric switch signal characteristic thereof, by means of which the operating position (II) assigned to emergency mode of at least the bi-stable protective-type preselection valve (7) can be indirectly set,
characterised in that
the hydraulic transmitter cylinder (49) of the emergency clutch device (47; 47') can be operated by means of an emergency pedal (48) bearing on the transmitter-cylinder piston (81), which is released for operation by the driver in emergency mode only,
the position of the transmitter-cylinder piston (81) can be detected by the position sensor (103) and the switch signal for the protective-type preselection valve (57) can be generated after a short initial proportion of the pressure build-up stroke has been effected by the transmitter-cylinder piston (81) and
the emergency-operation switch valve (42), which switches the alternative connection of the motordriven transmitter cylinder (22) and of the transmitter cylinder (49) of the emergency-operation control device (47; 47') operable by means of the emergency pedal (48), and a protective valve (56) of the protective valve arrangement (56, 57, 91), which switches to select the power booster (23; 23') in protective operation, are provided as pneumatically operable two-way valves having a resiliently-centred initial position (0) assigned to the protective as well as the emergency operating mode and can be commonly, electrically, pre-controlled by means of an emergency-operation control valve (91) provided as a solenoid valve.

2. An emergency clutch device as claimed in claim 1, characterised in that the emergency pedal (48) is recessed in a housing of the driver's cab and can be brought into the layout required for operation thereof by the removal of a cover and/or an inward pivoting movement into a position bearing axially on a piston rod of the transmitter cylinder, effected automatically or by the driver.

3. An emergency clutch device as claimed in claim 1 or claim 2, characterised in that the protective valve (56) is switched between the pneumatic pressure supply connection of the hydraulically controllable proportional valve (36'), which is connected to the drive pressure chamber (37) of the pneumatic drive cylinder (33) of the power booster (23') when this valve (36') is in the initial position (I), and the pneumatic auxiliary pressure source (38) and has an initial position (0), in which the auxiliary pressure source (58) can be connected or is connected to the drive chamber (37) of the pneumatic drive cylinder (33) of the power booster (23').

4. An emergency clutch device as claimed in claim 3, characterised in that the protective-type preselection valve (57), is connected in hydraulic series directly before or after the protective valve (56) and has an operating position (II) in which the auxiliary pressure source (58) can be connected to the proportional valve (36') and has an alternative position of operation (I) thereto, in which the auxiliary pressure source (38) can not be connected to the proportional valve (36') via the protective valve (56).

5. An emergency clutch device as claimed in claim 3 or 4, characterised in that a pressure limiting valve (115) is inserted between the pressure outlet of the transmitter cylinder (49) operable by means of the emergency pedal (48) and the expansion tank (77) thereof.

6. An emergency clutch device as claimed in claim 5, characterised in that hydraulically connected in parallel to the pressure limiting valve (115) is a check valve (111), which is retained in a closed position if pressure at the pressure outlet of the pedal-operated transmitter cylinder (49) is higher in relative terms than in the expansion tank (77) and assumes its through-flow position if the pressure in the transmitter cylinder (49) is lower than in the expansion tank.

7. An emergency clutch device as claimed in claim 1 or claim 2, characterised in that an additional hydraulic transmitter cylinder is provided, which, in the event of an operating failure of the clutch device (10), is automatically controlled so that a pressure of the power booster (23) which can be transmitted to the output cylinder (32) can be built up and used to operate the release of the clutch (14).

8. An emergency clutch device as claimed in claim 7, characterised in that the additional transmitter cylinder is provided as the hydraulic output stage (66, 68, 72) of a pneumatic-hydraulic pressure relay (52), having a pneumatic input stage (71, 64, 67), to the input chamber (71) of which output pressure from the pneumatic auxiliary source (38) can be applied, under the automatic control of the protective valve arrangement.

9. An emergency clutch device as claimed in claim 8, characterised in that connected in hydraulic series directly before or after the protective valve (56) is the protective-type preselection valve (57) which switches the connection of the pneumatic auxiliary pressure source (38) to the input chamber (71) of the pressure relay (52) when in one of two alternative operation positions (I or II) and prevents this connection in the alternative operating position thereto (II or I).

10. An emergency clutch device as claimed in one of claims 7 to 9, characterised in that in order to connect the transmitter cylinder (49) operable by means of the emergency pedal (48) and the pneumatically controllable hydraulic cylinder (66, 68, 72) alternately to the emergency-operation switch valve (42), a pressure-controlled switch valve (62) is provided, which can be switched by means of the relatively higher output pressure of the respective transmitter cylinder (49 or 66, 68, 72) into the operating position connecting the latter to the emergency-operation switch valve (42) and the other transmitter cylinder into the operating position closing it off therefrom.

11. An emergency clutch device as claimed in claim 10, characterised in that the pressure-controlled switch valve (62) is provided as a change-over check valve.

12. An emergency clutch device as claimed in one of claims 8 to 11, characterised in that the input chamber (71) of the pressure relay (52) is connected into the system upstream of a pressure limiting valve (54).

13. An emergency clutch device as claimed in claim 12, characterised in that the pressure limiting valve (54) is switched between the drive chamber (71) of the pressure relay (52) and the hydraulic series connection comprising the protective valve (56) and the protective-type preselection valve (57).

14. An emergency clutch device as claimed in one of claims 1 to 13, characterised in that the motor-driven transmitter cylinder (22) and the transmitter cylinder (49) controlled by operation of the emergency pedal (48) have a common expansion and supply tank (77), which, optionally, may also be used as an expansion tank for the additional transmitter cylinder (66, 68, 72) provided for protective operation controlled by the switching of the pressure relay (52).

## Revendications

1. Dispositif d'embrayage de secours pour véhicules utilitaires dans lesquels les processus de débrayage et d'embrayage, qui sont nécessaires pour le changement de vitesse d'une boîte à plusieurs vitesses (11) et qui peuvent être commandés électroniquement par un module de commande d'embrayage (17), peuvent être exécutés automatiquement au moyen d'un dispositif hydropneumatique d'actionnement de l'embrayage et, en cas d'un fonctionnement défectueux de la commande automatique (17) de l'exécution de la manoeuvre, tout d'abord un système à distributeurs de protection (56, 57, 91) entre en action et, en cas de fonctionnement défectueux de la commande, desserre l'embrayage (14) au moyen du dispositif d'actionnement de l'embrayage en marche lente (v<vₛ) et le serre en marche rapide (v>vₛ) ou le tient serré et ensuite le chauffeur peut commander au moyen du dispositif d'embrayage de secours (47 ; 47') les manoeuvres de desserrage et de serrage de l'embrayage (14) qui sont nécessaires en régime de marche de secours pour un changement de vitesse,
- le dispositif d'actionnement de l'embrayage comprenant un maître-cylindre hydraulique (22) qui peut être entraîné au moyen d'un moteur électrique commandé (28) et dont la chambre sous pression de sortie (26) est raccordée à la chambre sous pression d'entraînement (34) d'un cylindre hydraulique récepteur (32) lorsqu'un distributeur de branchement en régime d'urgence (42) est à la position normale de service (I), ledit cylindre récepteur hydraulique (32)
- étant l'élément de commande d'un amplificateur hydropneumatique de force qui procède à l'actionnement de l'embrayage et qui comprend un cylindre pneumatique de commande (33) qui sert d'autre élément de commande et d'amplification et qui
- peut recevoir, par l'intermédiaire d'un distributeur proportionnel (36 ; 36') pouvant être commandé par la pression régnant dans le cylindre récepteur (32), une pression de commande qui est en proportionnalité avec cette pression hydraulique et qui est dérivée d'une source auxiliaire de pression pneumatique (38),
- le dispositif d'embrayage de secours (47 ; 47') comprenant de son côté un maître-cylindre hydraulique (49) équipé d'un piston de maître-cylindre qui, à une position fonctionnelle (0) du distributeur de branchement en régime de secours (42), qui est associée au régime de protection et de marche de secours, est raccordé, au lieu du maître-cylindre (22) commandé par moteur, au cylindre récepteur (32) de l'amplificateur de force (23 ; 23'), le maître-cylindre (49)
- commandant par ailleurs l'attaque de l'amplificateur de force (23 ; 23') pour l'exécution de processus de desserrage et de serrage de l'embrayage (14) lorsqu'un discributeur bistable de présélection du mode de protection (57) du système à distributeurs de protection (56, 57, 91) occupe une position fonctionnelle (II) de régime de secours qui est associée à un régime de marche de secours lors d'une manoeuvre déclenchée par le chauffeur et
- dans lequel un capteur électronique ou électromécanique de position (103), est prévu et répond à un changement de position d'un élément d'actionnement du dispositif d'embrayage de secours (47 ; 47'), générant à la fin d'un actionnement du dispositif d'embrayage de secours un signal électrique de commutation qui est caractéristique de cet actionnement et qui peut mettre directement au moins le distributeur bistable de présélection du mode de protection (57) à la position fonctionnelle associée au régime de marche de secours,
caractérisé en ce que
le maître-cylindre hydraulique (49) du dispositif d'embrayage de secours (47 ; 47') peut être actionné au moyen d'une pédale de secours (48) qui peut prendre appui contre le piston (81) du maître-cylindre et qui ne peut être libérée par le chauffeur pour être actionnée qu'en régime de marche de secours, en ce que
la position du piston (81) du maître-cylindre peut être détectée par le capteur de position (103) et le signal d'inversion du distributeur (57) de présélection du mode de protection peut être généré à la fin de l'exécution d'une courte partie initiale de la course d'élévation de pression du piston (81) du maître-cylindre et
en ce que le distributeur (42) de branchement en régime de secours, qui procède au raccordement alternatif du maître-cylindre (22) commandé par moteur et du maître-cylindre (49) du dispositif de commande du régime de secours (47 ; 47') qui est actionné au moyen de la pédale de secours (48), ainsi qu'un distributeur de protection (56) du système de distributeurs de protection (56, 57, 91), qui procède en régime de protection à l'attaque de l'amplificateur de force (23 ; 23'), sont conformés en distributeurs à deux positions à commande pneumatique ayant une position de base (0) centrée par ressort, associée au régime de protection ainsi qu'au régime de secours et ils peuvent être pilotés électriquement ensemble au moyen d'un distributeur de commande en régime de secours (91) qui est conformé en électrovanne.

2. Dispositif d'embrayage de secours selon la revendication 1, caractérisé en ce que la pédale de secours (48) est disposée en étant noyée dans une niche de la cabine du conducteur et peut être mise à la disposition qui convient pour son actionnement par enlèvement d'un élément de couverture qui s'effectue automatiquement ou auquel le chauffeur doit procéder et/ou par basculement la mettant à une position à laquelle elle prend appui axialement contre une tige de piston du maître-cylindre.

3. Dispositif d'embrayage de secours selon la revendication 1 ou la revendication 2, caractérisé en ce que le distributeur de protection (56) est monté entre le raccord à l'alimentation en pression pneumatique du distributeur proportionnel (36'), qui peut être commandé hydrauliquement et qui, lorsque ce distributeur (36') est à la position de base (I), est raccordé à la chambre sous pression de commande (37) du cylindre pneumatique (33) de commande de l'amplificateur de force (23'), et la source auxiliaire de pression pneumatique (38) et il a une position de base (0) à laquelle la source de pression auxiliaire (58) peut être raccordée ou est raccordée à la chambre de commande (37) du cylindre pneumatique (33) de commande de l'amplificateur de force (23').

4. Dispositif d'embrayage de secours selon la revendication 3, caractérisé en ce que le distributeur (57) de présélection du mode de protection est monté directement en amont ou en aval du distributeur de protection (56) en un montage hydraulique en série et il a une position fonctionnelle (II) à laquelle la source auxiliaire de pression (58) peut être raccordée au distributeur proportionnel (36') ainsi qu'une position fonctionnelle (I) alternative par rapport à la précédente, à laquelle un raccordement de la source auxiliaire de pression (38) au distributeur proportionnel (36') par l'intermédiaire du distributeur de protection (56) est exclu.

5. Dispositif d'embrayage de secours selon la revendication 3 ou 4, caractérisé en ce qu'un limiteur de pression (115) est monté entre la sortie sous pression du maître-cylindre (49) pouvant être actionné par la pédale de secours (48) et son réservoir de compensation (77).

6. Dispositif d'embrayage de secours selon la revendication 5, caractérisé en ce qu'une soupape de retenue (111) montée hydrauliquement en parallèle avec le limiteur de pression (115) est tenue en position de blocage par une pression qui règne à la sortie sous pression du maître-cylindre (49) pouvant être commandé par la pédale et qui est relativement plus élevée que celle qui règne dans le réservoir de compensation (77) et elle occupe sa position de circulation lorsque la pression régnant dans le maître-cylindre (49) est inférieure à celle qui règne dans le réservoir de compensation (77).

7. Dispositif d'embrayage de secours selon la revendication 1 ou la revendication 2, caractérisé en ce qu'un autre maître-cylindre hydraulique qui est prévu est attaqué automatiquement, en cas d'un fonctionnement défectueux du dispositif d'embrayage (10), dans le sens de l'élévation d'une pression qui peut être dirigée sur le cylindre récepteur (32) de l'amplificateur de force (23) et qui est utilisable pour le desserrage de l'embrayage (14).

8. Dispositif d'embrayage de secours selon la revendication 7, caractérisé en ce que l'autre maître-cylindre est conformé en étage hydraulique de sortie (66, 68, 72) d'un convertisseur pneumatique-hydraulique de pression (52) ayant un étage pneumatique d'entrée (71, 74, 67) dont la chambre d'entrée (71) peut recevoir la pression de sortie de la source auxiliaire de pression pneumatique (38) sous la commande automatique par le système à distributeurs de protection.

9. Dispositif d'embrayage de secours selon la revendication 8, caractérisé en ce que le distributeur (57) de présélection du mode de protection, qui est monté directement en amont ou en aval du distributeur de protection (56) en un montage hydraulique en série, procède, à l'une de deux positions fonctionnelles alternatives (I ou II), au raccordement de la source auxiliaire de pression pneumatique (38) à la chambre d'entrée (71) du convertisseur de pression (52) et il exclut ce raccordement lorsqu'il est à l'autre des positions fonctionnelles (II ou I).

10. Dispositif d'embrayage de secours selon l'une des revendications 7 à 9, caractérisé en ce qu'un distributeur inverseur (62) commandé par pression, qui est prévu pour le raccordement alterné du maître-cylindre (49) pouvant être actionné au moyen de la pédale de secours (48) et du maître-cylindre hydraulique (66, 68, 72) pouvant être attaqué pneumatiquement au distributeur de branchement en régime de secours (42), peut être commandé par la pression initiale relativement élevée du maître-cylindre particulier (49 ou 66, 68, 72) pour être mis à la position fonctionnelle qui raccorde ce dernier au distributeur de branchement en régime de secours (42) et qui bloque l'autre maître-cylindre vis à vis de ce dernier.

11. Dispositif d'embrayage de secours selon la revendication 10, caractérisé en ce que le distributeur d'inversion (62) commandé par pression est conformé en soupape de retenue à deux voies.

12. Dispositif d'embrayage de secours selon l'une des revendications 8 à 11, caractérisé en ce qu'un limiteur de pression (54) est monté en amont de la chambre d'entrée (71) du convertisseur de pression (52).

13. Dispositif d'embrayage de secours selon la revendication 12, caractérisé en ce que le limiteur de pression (54) est monté entre la chambre de commande (71) du convertisseur de pression et le montage hydraulique en série comprenant le distributeur de protection (56) et le distributeur (57) de présélection du mode de protection.

14. Dispositif d'embrayage de secours selon l'une des revendications 1 à 13, caractérisé en ce que le maître-cylindre (22) commandé par moteur et le maître-cylindre (49) commandé par actionnement de la pédale de secours (48) comprennent un réservoir commun de compensation et de réserve qui peut éventuellement être aussi utilisé en réservoir de compensation pour l'autre maître-cylindre (66, 68, 72) pouvant être commandé par attaque du convertisseur de pression (52) et prévu pour le régime de protection.
